# EUROPEAN PATENT SPECIFICATION

(11) **EP 2 770 000 B1**
(45) Date of publication and mention of the grant of the patent: **18.05.2016**
(21) Application number: 12841343.2
(22) Date of filing: 18.10.2012
(51) Int. Cl.: C08F 299/06, B32B 27/00, B32B 27/30, C09J 4/06, C09J 7/02, C09J 11/06, C09J 167/07, C09J 175/14

(54) **ACTIVE-ENERGY-RAY-CURABLE RESIN COMPOSITION, ADHESIVE, AND LAMINATE FILM**
DURCH AKTIVENERGIESTRAHLUNG HÄRTBARE KUNSTHARZZUSAMMENSETZUNG, KLEBSTOFF UND SCHICHTFOLIE
COMPOSITION DE RÉSINE DURCISSABLE SOUS L'EFFET D'UN RAYONNEMENT D'ÉNERGIE ACTIVE, ADHÉSIF ET FILM STRATIFIÉ

(30) Priority: 19.10.2011 JP 2011229668
(43) Date of publication of application: 27.08.2014
(73) Proprietor: DIC Corporation, Tokyo 174-8520 (JP)
(72) Inventor: SUGIYAMA Masashi, Ichihara-shi Chiba 290-8585 (JP); HAMAMOTO Ikue, Ichihara-shi Chiba 290-8585 (JP); INOUE Naoto, Ichihara-shi Chiba 290-8585 (JP); NAKAZAWA Daisuke, Takaishi-shi Osaka 592-0001 (JP); IBE Takeshi, Sakura-shi Chiba 285-8668 (JP)
(74) Representative: TBK
(86) International application number: PCT/JP2012/076982
(87) International publication number: WO 2013/058330

(56) References cited:
- WO-A1-2005/090509
- JP-A- S5 428 385
- JP-A- H05 179 205
- JP-A- H07 310 065
- JP-A- H11 181 392
- JP-A- 2004 339 384
- JP-A- 2006 257 226
- JP-A- 2007 234 189
- JP-A- 2010 031 297
- US-A1- 2009 065 140

## Description

### Technical Field

The present invention relates to an active-energy-ray-curable resin composition, an adhesive obtained by using the resin composition, and a laminate film obtained by using the adhesive.

### Background Art

Laminate films obtained by laminating various functional films with adhesive are indispensable members for various products such as liquid crystal display devices, personal computers, and solar cell modules. A base member that is widely used for such a laminate film is a polyethylene terephthalate (hereafter abbreviated as "PET") film. The PET film is one of base members that are difficult to bond with adhesive. In general, a PET film having enhanced adhesion is used, the PET film having a bonding surface having been subjected to an adhesion-improving treatment such as a corona treatment. Thus, in order to enhance the productivity of laminate films and to reduce the cost, there is a need for an adhesive that even allows strong bonding of PET films not having been subjected to an adhesion-improving treatment (hereafter abbreviated as "untreated PET films"). In addition, since the probability that electronic devices are used outdoors has increased in recent years, such as car navigation systems and solar cell modules, the adhesive needs to maintain high bonding strength even in outdoor environments at high temperature and at high humidity.

A known coating resin composition that exhibits high adhesion to untreated PET films is a coating resin composition containing a homopolymer of methyl methacrylate (Tg: 105°C, weight-average molecular weight (Mw): 47,500, SP value: 10.0) and pentaerythritol tetraacrylate (refer to Patent Literature 1). This resin composition exhibits higher adhesion to untreated PET films than the existing coating resin compositions. However, the resin composition was invented for coating-material applications and hence does not have such a high adhesion that it can be used as an adhesive for bonding films together.

Among various functional films used for laminate films, in addition to untreated PET films, there are a large number of films that are difficult to bond. For example, fluorine-based films formed of polyvinyl fluoride resin, polyvinylidene fluoride resin, or the like, which are excellent in terms of weather resistance, heat resistance, and resistance to dirt and used as members for solar cell modules or the like, have high water- and oil-repellency and hence difficult to bond with adhesives. Polycarbonate films, which are excellent in terms of impact resistance, are difficult to strongly bond with the existing adhesives. Under these circumstances, there has been a demand for an adhesive exhibiting high adhesion to various difficult-to-bond plastic films such as untreated PET films.

### Citation List

### Patent Literature

PTL 1: Japanese Unexamined Patent Application Publication No. 2006-257226

### Summary of Invention

### Technical Problem

An object of the present invention is to provide an active-energy-ray-curable resin composition that exhibits high bonding strength to plastic films that are difficult to bond such as untreated PET films, fluorine-based films, and polycarbonate films, which are referred to as difficult-to-bond films, and that can maintain the bonding strength even under wet heat conditions; an adhesive including the resin composition; and a laminate film obtained by using the adhesive.

### Solution to Problem

The inventors of the present invention performed thorough studies on how to achieve the object and, as a result, have found that an active-energy-ray-curable resin composition exhibits high bonding strength even to difficult-to-bond films such as untreated PET films, fluorine-based films, and polycarbonate films and can maintain the bonding strength even under wet heat conditions, the active-energy-ray-curable resin composition including, as essential components, a (meth)acrylate compound (A), a polyester resin (B), and a polymerization initiator (D), the (meth)acrylate compound (A) having a weight-average molecular weight (Mw) in a range of 5,000 to 30,000 and including, in a molecular structure, a (meth)acryloyl group and a polyester moiety that is obtained by reacting an aliphatic polyol and an aliphatic or aromatic polybasic acid that serve as main raw material components, and the polyester resin (B) having an acid value in a range of 40 to 90 mgKOH/g and being obtained by reacting an aliphatic polyol and an aliphatic or aromatic polybasic acid that serve as main raw material components. Thus, the inventors have accomplished the present invention.

Accordingly, the present invention relates to an active-energy-ray-curable resin composition including, as essential components, a (meth)acrylate compound (A), a polyester resin (B), and a polymerization initiator (D), the (meth)acrylate compound (A) having a weight-average molecular weight (Mw) in a range of 5,000 to 30,000 and including, in a molecular structure, a (meth)acryloyl group and a polyester moiety that is obtained by reacting an aliphatic polyol and an aliphatic or aromatic polybasic acid that serve as main raw material components, and the polyester resin (B) having an acid value in a range of 40 to 90 mgKOH/g and being obtained by reacting an aliphatic polyol and an aliphatic or aromatic polybasic acid that serve as main raw material components.

The present invention also relates to an adhesive including the above-described active-energy-ray-curable resin composition.

The present invention also relates to a laminate film obtained by using the above-described adhesive. Advantageous Effects of Invention

The present invention can provide an active-energy-ray-curable resin composition that exhibits high adhesion to difficult-to-bond films such as untreated PET films, fluorine-based films, and polycarbonate films and that can maintain the adhesion even under wet heat conditions; an adhesive including the resin composition; and a laminate film obtained by using the adhesive.

### Description of Embodiments

An active-energy-ray-curable resin composition according to the present invention includes, as essential components, a (meth)acrylate compound (A) and a polyester resin (B), the (meth)acrylate compound (A) having a weight-average molecular weight (Mw) in a range of 5,000 to 30,000 and including, in a molecular structure, a (meth)acryloyl group and a polyester moiety that is obtained by reacting an aliphatic polyol and an aliphatic or aromatic polybasic acid that serve as main raw material components, and the polyester resin (B) having an acid value in a range of 40 to 90 mgKOH/g and being obtained by reacting an aliphatic polyol and an aliphatic or aromatic polybasic acid that serve as main raw material components.

The (meth)acrylate compound (A) is a component in which, upon application of an active energy ray, (meth)acryloyl groups in the molecular structure undergo a polymerization reaction to cause curing to thereby bond plastic films together or to form a cross-linking structure to thereby increase the bonding strength under wet heat conditions. On the other hand, the polyester resin (B) is a component that has a relatively high acid value and, as a result, increases the affinity of the resin composition of the present application for difficult-to-bond films such as untreated PET films and fluorine-based films. By containing the polyester resin (B), the adhesion between a difficult-to-bond plastic film and the adhesive is enhanced in a lamination step, which is a stage after bonding films together with the adhesive and before curing by application of an active energy ray. In such a state of a high degree of adhesion, the curing reaction of the (meth)acrylate compound (A) is caused, so that films can be bonded together very strongly.

The (meth)acrylate compound (A) used in the present invention has a weight-average molecular weight (Mw) in the range of 5,000 to 30,000. As a result, the resin composition exhibits high bonding strength even to various difficult-to-bond films. In the case where the weight-average molecular weight (Mw) is less than 5,000, in the lamination step, the adhesion between a plastic film base member and the adhesive becomes low and the bonding strength after curing becomes low. In the case where the weight-average molecular weight (Mw) is more than 30,000, the (meth)acrylate compound (A) becomes highly viscous and the coatability of the resultant resin composition becomes poor. In particular, the weight-average molecular weight (Mw) is preferably in the range of 7,000 to 25,000, more preferably in the range of 8,500 to 21,000, because the resultant resin composition exhibits high adhesion to base members in the lamination step and has a viscosity suitable for coating.

Note that, in the present invention, the weight-average molecular weight (Mw) is a value measured by gel permeation chromatography (GPC) under the following conditions.
Measurement device: HLC-8220GPC manufactured by Tosoh Corporation
Columns: TSK-GUARDCOLUMN Super HZ-L manufactured by Tosoh Corporation
   + TSK-GEL Super HZM-M × 4 manufactured by Tosoh Corporation
Detector: RI (refractive index detector)
Data processing: Multi-station GPC-8020 model II manufactured by Tosoh Corporation
Measurement conditions:
   Column temperature 40°C
   Solvent tetrahydrofuran
   Flow rate 0.35 ml/min
Standards: monodisperse polystyrenes
Sample: sample (100 µl) prepared by filtering a 0.2 mass% tetrahydrofuran solution in terms of resin solid content with a microfilter

The (meth)acrylate compound (A) is a compound that includes, in the molecular structure, a (meth)acryloyl group and a polyester moiety that is obtained by reacting an aliphatic polyol and an aliphatic or aromatic polybasic acid that serve as main raw material components. The (meth)acrylate compound (A) is obtained by, for example, the following method: a polyester polyol (a1) obtained by reacting an aliphatic polyol and an aliphatic or aromatic polybasic acid is made to react with a polyisocyanate compound (a2) under a condition in which the number of moles of isocyanate groups of the polyisocyanate compound (a2) is excess with respect to the number of moles of hydroxy groups of the polyester polyol (a1); and an intermediate resulted from this reaction is made to react with a hydroxy-group-containing (meth)acrylate (a3).

Examples of the aliphatic polyol serving as a raw material of the polyester polyol (a1) include aliphatic polyols such as ethylene glycol, diethylene glycol, propylene glycol, 1,3-propanediol, 1,2,2-trimethyl-1,3-propanediol, 2,2-dimethyl-3-isopropyl-1,3-propanediol, 1,4-butanediol, 1,3-butanediol, 3-methyl-1,3-butanediol, 1,5-pentanediol, 3-methyl1,5-pentanediol, neopentyl glycol, 1,6-hexanediol, 2,2,4-trimethyl-1,3-pentanediol, 1,4-bis(hydroxymethyl)cyclohexane, trimethylolethane, trimethylolpropane, glycerin, hexanetriol, and pentaerythritol;
ether glycols such as polyoxyethylene glycol and polyoxypropylene glycol;
modified polyether polyols obtained by ring-opening polymerization between the aliphatic polyol and various cyclic ether-linkage-containing compounds such as ethylene oxide, propylene oxide, tetrahydrofuran, ethyl glycidyl ether, propyl glycidyl ether, butyl glycidyl ether, phenyl glycidyl ether, and allyl glycidyl ether; and
lactone-based polyester polyols obtained by polycondensation reactions between the aliphatic polyol and various lactones such as ε-caprolactone. These examples may be used alone or in combination of two or more thereof. Of these, preferred are aliphatic diols having branched chains such as 1,2,2-trimethyl-1,3-propanediol, 2,2-dimethyl-3-isopropyl-1,3-propanediol, 1,3-butanediol, 3-methyl-1,3-butanediol, 3-methyl1,5-pentanediol, neopentyl glycol, and 2,2,4-trimethyl-1,3-pentanediol, and particularly preferred is 3-methyl1,5-pentanediol, because the resultant resin composition exhibits high adhesion to plastic film base members during lamination and exhibits a high bonding strength after being cured.

Examples of the polybasic acid serving as a raw material of the polyester polyol (a1) include aliphatic dibasic acids such as malonic acid, succinic acid, glutaric acid, adipic acid, pimelic acid, suberic acid, azelaic acid, and sebacic acid;
aromatic dibasic acids such as phthalic acid, phthalic anhydride, terephthalic acid, isophthalic acid, and orthophthalic acid;
alicyclic dibasic acids such as hexahydrophthalic acid and 1,4-cyclohexanedicarboxylic acid;
aliphatic unsaturated dibasic acids such as tetrahydrophthalic acid, maleic acid, maleic anhydride, fumaric acid, citraconic acid, itaconic acid, and glutaconic acid;
aliphatic tribasic acids such as 1,2,5-hexanetricarboxylic acid and 1,2,4-cyclohexanetricarboxylic acid; and
aromatic tribasic acids such as trimellitic acid and 2,5,7-naphthalenetricarboxylic acid. These examples may be used alone or in combination of two or more thereof. Of these, preferred are the aliphatic dibasic acids because the resultant urethane (meth)acrylate (A) has high solubility in solvents and a resin composition having high coatability can be obtained. More preferred are aliphatic dibasic acids having 4 to 8 carbon atoms such as succinic acid, glutaric acid, adipic acid, pimelic acid, and suberic acid, and particularly preferred is adipic acid. In the case where the bonding target is an untreated PET film, preferred are aromatic dibasic acids such as phthalic acid, phthalic anhydride, terephthalic acid, isophthalic acid, and orthophthalic acid, more preferred is terephthalic acid, because the resultant resin composition exhibits high adhesion to the untreated PET film and has a higher bonding strength.

The polyester polyol (a1) may be produced by, for example, a method in which a reaction between the polyol and the polybasic acid is caused under a temperature condition of 150°C to 250°C and optionally with an esterification catalyst while generated water is removed.

The thus-obtained polyester polyol (a1) preferably has a number-average molecular weight (Mn) in the range of 500 to 6,000, more preferably in the range of 750 to 4,000, particularly preferably in the range of 900 to 3,000, because the resultant resin composition has high adhesion to base members during the lamination step and has a viscosity suitable for coating.

In addition, the polyester polyol (a1) preferably has a hydroxyl value in the range of 6 to 300 mgKOH/g, more preferably in the range of 20 to 200 mgKOH/g, particularly preferably in the range of 50 to 160 mgKOH/g, because the degree of shrinkage of the resultant resin composition due to curing is small and the resin composition has a high bonding strength after being cured.

Examples of the polyisocyanate compound (a2) serving as a raw material of the (meth)acrylate compound (A) include various diisocyanate monomers, adduct-type polyisocyanate compounds intramolecularly having urethane linkage moieties, and nurate-type polyisocyanate compounds intramolecularly having isocyanurate ring structures.

Examples of the diisocyanate monomers include aliphatic diisocyanates such as butane-1,4-diisocyanate, hexamethylene diisocyanate, 2,2,4-trimethylhexamethylene diisocyanate, 2,4,4-trimethylhexamethylene diisocyanate, xylylene diisocyanate, and m-tetramethylxylylene diisocyanate;
alicyclic diisocyanates such as cyclohexane-1,4-diisocyanate, isophorone diisocyanate, lysine diisocyanate, dicyclohexylmethane-4,4'-diisocyanate, 1,3-bis(isocyanatemethyl)cyclohexane, and methylcyclohexane diisocyanate; and
aromatic diisocyanates such as 1,5-naphthylene diisocyanate, 4,4'-diphenylmethane diisocyanate, 4,4'-diphenyldimethylmethane diisocyanate, 4,4'-dibenzyl diisocyanate, dialkyldiphenylmethane diisocyanates, tetraalkyldiphenylmethane diisocyanates, 1,3-phenylene diisocyanate, 1,4-phenylene diisocyanate, and tolylene diisocyanate.

The adduct-type polyisocyanate compounds intramolecularly having urethane linkage moieties can be obtained by, for example, reacting a diisocyanate monomer and a polyol. Examples of the diisocyanate monomer used in the reaction include the above-described various diisocyanate monomers and these monomers may be used alone or in combination of two or more thereof. Examples of the polyol used in the reaction include the various polyols described above as examples of a raw material of the polyester polyol (a1) and the various polyester polyols described above as examples of the polyester polyol (a1). These polyols may be used alone or in combination of two or more thereof.

The nurate-type polyisocyanate compounds intramolecularly having isocyanurate ring structures within molecules can be obtained by, for example, reacting a diisocyanate monomer and a monoalcohol and/or a diol. Examples of the diisocyanate monomer used in the reaction include the above-described various diisocyanate monomers and these monomers may be used alone or in combination of two or more thereof. Examples of the monoalcohol used in the reaction include hexanol, 2-ethylhexanol, octanol, n-decanol, n-undecanol, n-dodecanol, n-tridecanol, n-tetradecanol, n-pentadecanol, n-heptadecanol, n-octadecanol, n-nonadecanol, eicosanol, 5-ethyl-2-nonanol, trimethylnonyl alcohol, 2-hexyldecanol, 3,9-diethyl-6-tridecanol, 2-isoheptylisoundecanol, 2-octyldodecanol, and 2-decyltetradecanol. Examples of the diol include the various diols described above as examples of a raw material of the polyester polyol (a1). These monoalcohols and diols may be used alone or in combination of two or more thereof.

Among the various isocyanate compounds (a2) described above, diisocyanate monomers are preferred because the weight-average molecular weight (Mw) of the resultant (meth)acrylate compound (A) can be easily adjusted so as to be within the above-described preferred range. More preferred are isophorone diisocyanate, dicyclohexylmethane-4,4'-diisocyanate, 4,4'-diphenylmethane diisocyanate, and tolylene diisocyanate because the resultant resin composition exhibits both high adhesion to plastic film base members during lamination and a high bonding strength after being cured.

Examples of the hydroxy-group-containing (meth)acrylate compound (a3) serving as a raw material of the (meth)acrylate compound (A) include 2-hydroxyethyl (meth)acrylate, 2-hydroxypropyl (meth)acrylate, 4-hydroxybutyl (meth)acrylate, 2-hydroxyethyl acrylamide, glycerin di(meth)acrylate, trimethylolpropane di(meth)acrylate, pentaerythritol tri(meth)acrylate, and dipentaerythritol penta(meth)acrylate. These compounds may be used alone or in combination of two or more thereof. Of these, preferred are the monofunctional (meth)acrylate compounds such as 2-hydroxyethyl acrylate, 2-hydroxypropyl acrylate, 4-hydroxybutyl acrylate, and 2-hydroxyethyl acrylamide, and more preferred are 2-hydroxyethyl acrylate and 2-hydroxypropyl acrylate, because the degree of shrinkage of the resultant resin composition during curing is small and the resin composition has a higher bonding strength after being cured.

The (meth)acrylate compound (A) may be produced by, for example, the following method: a reaction between the polyester polyol (a1) and the polyisocyanate compound (a2) is caused to provide an intermediate under a temperature condition of 20°C to 120°C optionally in the presence of a urethane-forming catalyst such that a ratio [(OH)/(NCO)] of the number of moles of hydroxy groups (OH) of the polyester polyol (a1) to the number of moles of isocyanate groups (NCO) of the polyisocyanate compound (a2) falls within the range of 1/2 to 1/2.1; and a reaction between the intermediate and the hydroxy-group-containing (meth)acrylate compound (a3) is caused under a temperature condition of 20°C to 120°C optionally in the presence of a urethane-forming catalyst such that a ratio [(OH)/(NCO)] of the number of moles of hydroxy groups (OH) of the hydroxy-group-containing (meth)acrylate compound (a3) to the number of moles of isocyanate groups (NCO) of the intermediate falls within the range of 1/0.95 to 1/1.05.

Other production methods include, for example, a method in which the polyester polyol (a1), the polyisocyanate compound (a2), and the hydroxy-group-containing (meth)acrylate compound (a3) are added all at once and a reaction is caused; and a method in which a reaction between the isocyanate compound (a2) and the hydroxy-group-containing (meth)acrylate compound (a3) is caused and an intermediate resulted from the reaction is then made to react with the polyester polyol (a1).

The thus-obtained (meth)acrylate compound (A) preferably has a glass transition temperature (hereafter abbreviated as "Tg") in the range of -70°C to 100°C, more preferably in the range of -40 to 60, because the resultant resin composition exhibits enhanced adhesion to plastic film base members during lamination and exhibits a high bonding strength after being cured.

The (meth)acrylate compound (A) preferably has a (meth)acryloyl-group concentration in the range of 0.05 to 0.5 mmol/g, more preferably in the range of 0.1 to 0.3 mmol/g, because the resultant resin composition allows formation of a cross-linking structure having an optimal density as adhesive, that is, shrinkage in volume during curing is less likely to occur, and the resin composition has high water resistance and exhibits a high bonding strength under wet heat conditions.

In addition, in the case where the (meth)acrylate compound (A) is a compound obtained by reacting the polyester polyol (a1), the polyisocyanate compound (a2), and the hydroxy-group-containing (meth)acrylate (a3), the (meth)acrylate compound (A) preferably has a urethane-linkage concentration in the range of 0.6 to 5 mmol/g, more preferably in the range of 0.8 to 3 mmol/g, because the resultant resin composition exhibits enhanced adhesion to plastic film base members during lamination and exhibits a high bonding strength after being cured.

Hereinafter, the polyester resin (B), which is used in combination with the (meth)acrylate compound (A) in the present invention, will be described. As described above, the polyester resin (B) has a relatively high acid value of 40 to 90 mgKOH/g and, as a result, the resin composition of the present invention has enhanced affinity for PET films and fluorine-based films and exhibits high wettability during coating. In the case where the acid value is less than 40 mgKOH/g, the effect of enhancing the affinity for plastic film base members is degraded. In the case where the acid value is more than 90 mgKOH/g, the polarity becomes high and the hydrophilicity is increased, resulting in low wet heat resistance. In particular, the acid value is preferably in the range of 50 to 80 mgKOH/g because the resultant resin composition exhibits enhanced adhesion to base members during lamination and, as a result, exhibits a high bonding strength after being cured, and also exhibits a high bonding strength even under wet heat conditions.

The polyester resin (B) is obtained by reacting an aliphatic polyol and an aliphatic or aromatic polybasic acid that serve as main raw material components.

Examples of the aliphatic polyol serving as a raw material of the polyester resin (B) include the aliphatic polyols listed above as raw materials of the polyester polyol (a1). These polyols may be used alone or in combination of two or more thereof. In particular, an aliphatic diol and an aliphatic polyol that has a functionality of three or more are preferably used in combination because the resultant resin composition exhibits enhanced adhesion to plastic film base members during lamination; examples of the aliphatic diol include ethylene glycol, diethylene glycol, propylene glycol, 1,3-propanediol, 1,2,2-trimethyl-1,3-propanediol, 2,2-dimethyl-3-isopropyl-1,3-propanediol, 1,4-butanediol, 1,3-butanediol, 3-methyl-1,3-butanediol, 1,5-pentanediol, 3-methyl1,5-pentanediol, neopentyl glycol, 1,6-hexanediol, 2,2,4-trimethyl-1,3-pentanediol, and 1,4-bis(hydroxymethyl)cyclohexane; and examples of the aliphatic polyol include trimethylolethane, trimethylolpropane, glycerin, hexanetriol, and pentaerythritol.

Examples of the polybasic acid serving as a raw material of the polyester resin (B) include the polybasic acids listed above as raw materials of the polyester polyol (a1). These polybasic acids may be used alone or in combination of two or more thereof. Of these, preferred are the aliphatic dibasic acids because the resultant polyester resin (B) has high solubility in solvents and a resin composition having high coatability can be obtained. More preferred are aliphatic dibasic acids having 4 to 8 carbon atoms such as succinic acid, glutaric acid, adipic acid, pimelic acid, and suberic acid, and particularly preferred is adipic acid. In the case where the bonding target is an untreated PET film, preferred are aromatic dibasic acids such as phthalic acid, phthalic anhydride, terephthalic acid, isophthalic acid, and orthophthalic acid, more preferred is terephthalic acid, because the resultant resin composition exhibits high adhesion to the untreated PET film and exhibits a higher bonding strength. In summary, the polybasic acid raw material of the polyester resin (B) is preferably a combination of an aliphatic dibasic acid having 4 to 8 carbon atoms such as succinic acid, glutaric acid, adipic acid, pimelic acid, or suberic acid, and an aromatic dibasic acid such as phthalic acid, phthalic anhydride, terephthalic acid, isophthalic acid, or orthophthalic acid.

The polyester resin (B) may be produced by, for example, a method in which a reaction between the polyol and the polybasic acid is caused under a temperature condition of 150°C to 250°C and optionally with an esterification catalyst while generated water is removed.

The thus-obtained polyester resin (B) preferably has a weight-average molecular weight (Mw) in the range of 3,000 to 20,000, more preferably in the range of 5,000 to 15,000, because the polyester resin (B) has high miscibility with the (meth)acrylate compound (A) and the resultant resin composition exhibits high adhesion to plastic film base members during lamination and exhibits high flowability.

In an active-energy-ray-curable resin composition according to the present invention, the content ratio by mass of [(A)/(B)] of the (meth)acrylate compound (A) to the polyester resin (B) is preferably in the range of 98/2 to 20/80, more preferably in the range of 95/5 to 45/55, because the resultant resin composition exhibits enhanced adhesion to base members during lamination and, as a result, exhibits an enhanced bonding strength after being cured, and also exhibits a high bonding strength even under wet heat conditions.

In the present invention, in addition to the (meth)acrylate compound (A) and the polyester resin (B), a (meth)acrylate compound (C) may be contained that has a weight-average molecular weight (Mw) in a range of 40,000 to 100,000 and includes, in a molecular structure, a (meth)acryloyl group and a polyester moiety that is obtained by reacting an aliphatic polyol and an aliphatic or aromatic polybasic acid that serve as main raw material components. In the case where the (meth)acrylate compound (C) is contained, the resin composition exhibits a high bonding strength particularly to difficult-to-bond plastic films such as untreated PET films, fluorine-based films, and polycarbonate films. Among such difficult-to-bond plastic films, fluorocarbon films are particularly difficult to bond. However, according to the present invention, as a result of use of the (meth)acrylate compound (C) in combination with the (meth)acrylate compound (A) and the polyester resin (B), strong bonding of fluorocarbon films can be achieved.

The (meth)acrylate compound (C) has a weight-average molecular weight (Mw) in the range of 40,000 to 100,000 and, as a result, adhesion to plastic film base members during lamination is enhanced and the bonding strength after curing is also increased. In particular, the weight-average molecular weight (Mw) is preferably in the range of 50,000 to 80,000 because the resultant resin composition exhibits a very high bonding strength after being cured.

The (meth)acrylate compound (C) includes, in the molecular structure, a (meth)acryloyl group and a polyester moiety that is obtained by reacting an aliphatic polyol and an aliphatic or aromatic polybasic acid that serve as main raw material components. Such a compound is obtained by, for example, the following method: a polyester polyol (c1) obtained by reacting an aliphatic polyol and an aliphatic or aromatic polybasic acid is made to react with a polyisocyanate compound (c2) under a condition in which the number of moles of isocyanate groups of the polyisocyanate compound (c2) is excess with respect to the number of moles of hydroxy groups of the polyester polyol (c1); and an intermediate resulted from this reaction is made to react with a hydroxy-group-containing (meth)acrylate compound (c3).

Examples of the aliphatic polyol serving as a raw material of the polyester polyol (c1) include the aliphatic polyols listed above as raw materials of the polyester polyol (a1). These aliphatic polyols may be used alone or in combination of two or more thereof. Of these, preferred are the aliphatic diols having branched chains such as 1,2,2-trimethyl-1,3-propanediol, 2,2-dimethyl-3-isopropyl-1,3-propanediol, 1,3-butanediol, 3-methyl-1,3-butanediol, 3-methyl1,5-pentanediol, neopentyl glycol, and 2,2,4-trimethyl-1,3-pentanediol, and particularly preferred is 3-methyl1,5-pentanediol, because the resultant resin composition exhibits high adhesion to plastic film base members during lamination and exhibits a high bonding strength after being cured.

Examples of the polybasic acid serving as a raw material of the polyester polyol (c1) include the polybasic acids listed above as raw materials of the polyester polyol (a1). These polybasic acids may be used alone or in combination of two or more thereof. Of these, preferred are the aliphatic dibasic acids because the resultant resin composition exhibits enhanced adhesion to plastic film base members during lamination and exhibits a high bonding strength after being cured. More preferred are aliphatic dibasic acids having 4 to 8 carbon atoms such as succinic acid, glutaric acid, adipic acid, pimelic acid, and suberic acid, and particularly preferred is adipic acid. In the case where the bonding target is an untreated PET film, preferred are aromatic dibasic acids such as phthalic acid, phthalic anhydride, terephthalic acid, isophthalic acid, and orthophthalic acid, more preferred is terephthalic acid, because the resultant resin composition exhibits high adhesion to the untreated PET film and exhibits a higher bonding strength.

The polyester polyol (c1) may be produced by, for example, a method in which a reaction between the polyol and the polybasic acid is caused under a temperature condition of 150°C to 250°C and optionally with an esterification catalyst while generated water is removed.

The thus-obtained polyester polyol (c1) preferably has a number-average molecular weight (Mn) in the range of 500 to 6,000, more preferably in the range of 750 to 4,000, particularly preferably in the range of 900 to 3,000, because the resultant resin composition exhibits high bonding strength to various difficult-to-bond films and has high wet heat resistance.

In addition, the polyester polyol (c1) preferably has a hydroxyl value in the range of 6 to 300 mgKOH/g, more preferably in the range of 20 to 200 mgKOH/g, particularly preferably in the range of 80 to 150 mgKOH/g, because the degree of shrinkage of the resultant resin composition due to curing is small and the resin composition exhibits a high bonding strength after being cured.

Examples of the polyisocyanate compound (c2) serving as a raw material of the (meth)acrylate compound (C) include the various polyisocyanate compounds listed above as the polyisocyanate (a2). These polyisocyanate compounds may be used alone or in combination of two or more thereof. Of these, diisocyanate monomers are preferred because the weight-average molecular weight (Mw) of the resultant urethane (meth)acrylate (A) can be easily adjusted so as to be within the above-described preferred range. More preferred are isophorone diisocyanate, dicyclohexylmethane-4,4'-diisocyanate, 4,4'-diphenylmethane diisocyanate, and tolylene diisocyanate because the resultant resin composition exhibits enhanced adhesion to plastic film base members during lamination and exhibits a high bonding strength after being cured.

Examples of the hydroxy-group-containing (meth)acrylate compound (c3) serving as a raw material of the (meth)acrylate compound (C) include the various hydroxy-group-containing (meth)acrylate compounds listed above as the hydroxy-group-containing (meth)acrylate (a3). These hydroxy-group-containing (meth)acrylate compounds may be used alone or in combination of two or more thereof. Of these, preferred are the monofunctional (meth)acrylate compounds such as 2-hydroxyethyl acrylate, 2-hydroxypropyl acrylate, 4-hydroxybutyl acrylate, and 2-hydroxyethyl acrylamide, and more preferred are 2-hydroxyethyl acrylate and 2-hydroxypropyl acrylate, because the degree of shrinkage of the resultant resin composition during curing is small and the resin composition exhibits a higher bonding strength after being cured.

The (meth)acrylate compound (C) may be produced by, for example, the following method: a reaction between the polyester polyol (c1) and the polyisocyanate compound (c2) is caused to provide an intermediate under a temperature condition of 20°C to 120°C optionally in the presence of a urethane-forming catalyst such that a ratio [(OH)/(NCO)] of the number of moles of hydroxy groups (OH) of the polyester polyol (c1) to the number of moles of isocyanate groups (NCO) of the polyisocyanate compound (c2) falls within the range of 1/2 to 1/2.1; and a reaction between the intermediate and the hydroxy-group-containing (meth)acrylate compound (c3) is caused under a temperature condition of 20°C to 120°C optionally in the presence of a urethane-forming catalyst such that a ratio [(OH)/(NCO)] of the number of moles of hydroxy groups (OH) of the hydroxy-group-containing (meth)acrylate compound (c3) to the number of moles of isocyanate groups (NCO) of the intermediate falls within the range of 1/0.95 to 1/1.05.

Other production methods include, for example, a method in which the polyester polyol (c1), the polyisocyanate compound (c2), and the hydroxy-group-containing (meth)acrylate compound (c3) are added all at once and a reaction is caused; and a method in which a reaction between the isocyanate compound (c2) and the hydroxy-group-containing (meth)acrylate compound (c3) is caused and an intermediate resulted from the reaction is then made to react with the polyester polyol (c1).

The thus-obtained (meth)acrylate compound (C) preferably has a Tg in the range of -70°C to 100°C, more preferably in the range of -50°C to 50°C, because the resultant resin composition exhibits high adhesion even to difficult-to-bond plastic films such as untreated PET films and fluorine-based films during lamination and exhibits a high bonding strength after being cured.

The (meth)acrylate compound (C) preferably has a (meth)acryloyl-group concentration in the range of 0.005 to 0.5 mmol/g, more preferably in the range of 0.01 to 0.2 mmol/g, because the resultant resin composition allows formation of a cross-linking structure having an optimal density as adhesive, that is, shrinkage in volume during curing is less likely to occur, and the resin composition has high water resistance and exhibits a high bonding strength under wet heat conditions.

In addition, in the case where the (meth)acrylate compound (C) is a compound obtained by reacting the polyester polyol (c1), the polyisocyanate compound (c2), and the hydroxy-group-containing (meth)acrylate compound (c3), the (meth)acrylate compound (C) preferably has a urethane-linkage concentration in the range of 0.1 to 5 mmol/g, more preferably in the range of 0.3 to 3 mmol/g, because the resultant resin composition exhibits high adhesion even to difficult-to-bond plastic films such as untreated PET films and fluorine-based films during lamination and exhibits a high bonding strength after being cured.

In the case where an active-energy-ray-curable resin composition according to the present invention contains the (meth)acrylate compound (C), the content ratio by mass of [(A)/(C)] of the (meth)acrylate compound (A) to the (meth)acrylate compound (C) is preferably in the range of 50/50 to 98/2, more preferably in the range of 60/40 to 95/5, particularly preferably in the range of 70/30 to 90/10, because the resin composition exhibits high adhesion even to difficult-to-bond plastic films such as untreated PET films and fluorine-based films and exhibits flowability that is suitable for coating.

Examples of the polymerization initiator (D) used in the present invention include 1-hydroxycyclohexyl phenyl ketone, 2-hydroxy-2-methyl-1-phenylpropane-1-one, 1-[4-(2-hydroxyethoxy)phenyl]-2-hydroxy-2-methyl-1-propane-1-one, thioxanthone, thioxanthone derivatives, 2,2'-dimethoxy-1,2-diphenylethane-1-one, 2,4,6-trimethylbenzoyl diphenylphosphine oxide, bis(2,4,6-trimethylbenzoyl)phenylphosphine oxide, 2-methyl-1-[4-(methylthio)phenyl]-2-morpholino-1-propanone, and 2-benzyl-2-dimethylamino-1-(4-morpholinophenyl)-butane-1-one.

Examples of commercially available products of these polymerization initiator (D) include "IRGACURE-184", "IRGACURE-149", "IRGACURE-261", "IRGACURE-369", "IRGACURE-500", "IRGACURE-651", "IRGACURE-754", "IRGACURE-784", "IRGACURE-819", "IRGACURE-907", "IRGACURE-1116", "IRGACURE-1664", "IRGACURE-1700", "IRGACURE-1800", "IRGACURE-1850", "IRGACURE-2959", "IRGACURE-4043", and "DAROCUR-1173" (manufactured by Ciba Specialty Chemicals); "Lucirin TPO" (manufactured by BASF); "KAYACURE-DETX", "KAYACURE-MBP", "KAYACURE-DMBI", "KAYACURE-EPA", and "KAYACURE-OA" (manufactured by Nippon Kayaku Co., Ltd.); "VICURE-10" and "VICURE-55" (manufactured by Stauffer Chemical Company); "Trigonal P1" (manufactured by Akzo); "Sandoray 1000" (manufactured by Sandoz Ltd.); "DEAP" (manufactured by Upjohn Company); and "Quantacure-PDO", "Quantacure-ITX", and "Quantacure-EPD" (manufactured by Ward Blenkinsop & Company Limited). Of these, a combined use of 1-hydroxycyclohexyl phenyl ketone (commercially available product "IRGACURE-184") and diphenyl(2,4,6-trimethylbenzoyl)phosphine oxide (commercially available product "Lucirin TPO") is preferred because they exert a higher curing effect on an active-energy-ray-curable resin composition according to the present invention.

The polymerization initiator (D) is preferably added in an amount in the range of 0.05 to 20 parts by mass, more preferably in the range of 0.1 to 10 parts by mass, with respect to 100 parts by mass of the resin components of an active-energy-ray-curable resin composition according to the present invention because high sensitivity to light is maintained and, for example, precipitation of crystals and degradation of coating film properties are not caused.

An active-energy-ray-curable resin composition according to the present invention may further contain various photosensitizers in combination with the photopolymerization initiator. Examples of the photosensitizers include amines, ureas, sulfur-containing compounds, phosphorus-containing compounds, chlorine-containing compounds, nitriles, and other nitrogen-containing compounds. These examples may be used alone or in combination of two or more thereof. In the case where an active-energy-ray-curable resin composition according to the present invention contains such a photosensitizer, the amount of the photosensitizer added is preferably in the range of 0.01 to 10 parts by mass with respect to 100 parts by mass of the resin components of an active-energy-ray-curable resin composition according to the present invention.

If necessary, an active-energy-ray-curable resin composition according to the present invention may contain an organic solvent. Examples include ketones such as acetone, methyl ethyl ketone, methyl isobutyl ketone, and cyclohexanone; cyclic ethers such as tetrahydrofuran and dioxolane; esters such as methyl acetate, ethyl acetate, and butyl acetate; aromatics such as toluene and xylene; and alcohols such as carbitol, cellosolve, methanol, isopropanol, butanol, and propylene glycol monomethyl ether. These solvents may be used alone or in combination of two or more thereof. In particular, preferred are methyl ethyl ketone, cyclohexanone, and tetrahydrofuran because they have high dissolving power for an active-energy-ray-curable resin composition according to the present invention.

In the case where such an organic solvent is used, the organic solvent is preferably used in such an amount that the non-volatile content (NV value) is in the range of 10% to 30% because an active-energy-ray-curable resin composition according to the present invention has enhanced storage stability and can be prepared so as to have a viscosity suitable for coating.

An active-energy-ray-curable resin composition according to the present invention may contain other various additives. Examples of the various additives include UV absorbers, antioxidants, silicon-based additives, fluorine-based additives, rheology control agents, defoaming agents, antistatic agents, and antifogging agents. In the case where an active-energy-ray-curable resin composition according to the present invention contains such additives, the content of the additives is preferably in the range of 0.01 to 40 parts by mass with respect to 100 parts by mass of the resin components of the active-energy-ray-curable resin composition according to the present invention as long as the additives sufficiently exhibit their effects and do not inhibit ultraviolet curing.

An active-energy-ray-curable resin composition according to the present invention may further contain another resin for the purpose of, for example, improving adhesion to film base members. Examples of the other resin include acrylic resins such as methyl methacrylate resin and methyl methacrylate-based copolymers; polystyrene and methyl methacrylate-styrene-based copolymers; polyester resins; polyurethane resins; polybutadiene resins such as polybutadiene and butadiene-acrylonitrile-based copolymers; and epoxy resins such as bisphenol-type epoxy resins, phenoxy resins, and novolac-type epoxy resins. In the case where an active-energy-ray-curable resin composition according to the present invention contains such resins, the content of the resins is preferably in the range of 1 to 50 parts by mass with respect to 100 parts by mass of the total content of the (meth)acrylate compound (A), the polyester resin (B), and the (meth)acrylate compound (C) as long as advantages of the present invention are sufficiently provided without being degraded.

In addition, an active-energy-ray-curable resin composition according to the present invention may further contain a (meth)acryloyl-group-containing monomer for the purpose of, for example, adjusting the viscosity of the resin composition. Examples of the (meth)acryloyl-group-containing monomer include (meth)acrylates having an alkyl group having 1 to 22 carbons such as methyl (meth)acrylate, ethyl (meth)acrylate, propyl (meth)acrylate, n-butyl (meth)acrylate, t-butyl (meth)acrylate, hexyl (meth)acrylate, heptyl (meth)acrylate, octyl (meth)acrylate, nonyl (meth)acrylate, decyl (meth)acrylate, dodecyl (meth)acrylate, tetradecyl (meth)acrylate, hexadecyl (meth)acrylate, stearyl (meth)acrylate, octadecyl (meth)acrylate, and docosyl (meth)acrylate; (meth)acrylates having an alicyclic alkyl group such as cyclohexyl (meth)acrylate, isobornyl (meth)acrylate, dicyclopentanyl (meth)acrylate, and dicyclopentenyloxyethyl (meth)acrylate; and (meth)acrylates having an aromatic ring such as benzoyloxyethyl (meth)acrylate, benzyl (meth)acrylate, phenylethyl (meth)acrylate, phenoxyethyl (meth)acrylate, phenoxydiethylene glycol (meth)acrylate, and 2-hydroxy-3-phenoxypropyl (meth)acrylate. In the case where an active-energy-ray-curable resin composition according to the present invention contains such (meth)acryloyl-group-containing monomers, the content of the monomers is preferably in the range of 1 to 50 parts by mass with respect to 100 parts by mass of the total content of the (meth)acrylate compound (A), the polyester resin (B), and the (meth)acrylate compound (C) as long as advantages of the present invention are sufficiently provided without being degraded.

An active-energy-ray-curable resin composition according to the present invention preferably has a viscosity in the range of 100 mPa·s to 10,000 mPa·s, more preferably in the range of 100 mPa·s to 3,000 mPa·s. When the viscosity satisfies such a range, the active-energy-ray-curable resin composition can be applied with a uniform thickness even under high-speed coating conditions.

A laminate film according to the present invention is obtained by applying an adhesive containing the above-described active-energy-ray-curable resin composition according to the present invention to a film-shaped coating base member serving as a member to be coated, by subsequently placing a film-shaped cover base member on the applied adhesive, and by curing the adhesive, wherein at least one of the coating base member and the cover base member is a difficult-to-bond film.

Specific examples of the difficult-to-bond film include polycarbonate films, polyethylene terephthalate films, polymethyl methacrylate films, melamine resin films, norbornene-based resin films, cyclic olefin-based resin films, polyimide resin films, polyvinyl fluoride resin films, and polyvinylidene fluoride resin films. Of these, even when untreated polyethylene terephthalate films, polycarbonate films, and fluorine-based films such as polyvinyl fluoride resin films and polyvinylidene fluoride resin films, which have been difficult to use for forming laminate films, are particularly used as coating base members or cover base members, high adhesion is exhibited according to the present invention.

On the other hand, in the case where such a difficult-to-bond film is used as one of a coating base member and a cover base member, as described above, the other base member may be an easy-to-bond film that is relatively easily bonded. Examples of the easy-to-bond film include films formed of polystyrene, polyesters, polyolefins, polyvinyl alcohol, epoxy resins, ABS resins, AS resins, and triacetylcellulose resins. According to the present invention, in the case where such difficult-to-bond films are used as both a coating base member and a cover base member, a high bonding strength is exhibited, in particular, even under wet heat conditions, a high bonding strength is exhibited, which is advantageous.

When a laminate film is obtained with an adhesive according to the present invention, the adhesive according to the present invention is preferably applied with a thickness in the range of 0.5 to 100 µm, more preferably in the range of 1 to 50 µm.

A method for applying the adhesive for polarizing plates may be, for example, bar-coater coating, roll-coater coating, spray coating, gravure coating, reverse gravure coating, offset printing, flexographic printing, or screen printing. Any of these methods may be used.

Hereinafter, an example of a method of obtaining a laminate film with an adhesive according to the present invention will be described. An adhesive according to the present invention is first applied to a surface of a plastic film serving a coating base member by any of the above-described application methods. In the case where the adhesive according to the present invention contains the organic solvent, in order to evaporate the solvent after the application, drying is performed at a temperature equal to or higher than the boiling point of the solvent for several minutes.

Subsequently, another plastic film serving as a cover base member is placed on the adhesive layer and laminated. At this time, if necessary, heating is performed under a temperature condition of 100°C to 120°C for about a minute, so that a higher bonding strength can be obtained.

Subsequently, the laminated film is irradiated with an active energy ray to cure the adhesive layer. Examples of such active energy rays for curing an active-energy-ray-curable resin according to the present invention or an adhesive containing this resin include ultraviolet rays and electron beams. When the curing is achieved with ultraviolet rays, an ultraviolet radiation apparatus having, as a light source, a xenon lamp, a high-pressure mercury-vapor lamp, or a metal halide lamp is used; and, for example, the radiation dose and the position of the light source are adjusted as needed. When a high-pressure mercury-vapor lamp is used, the curing is generally preferably performed at a transfer speed in the range of 5 to 50 m/min with respect to a single lamp having a radiation dose in the range of 80 to 160 W/cm. On the other hand, when the curing is achieved with electron beams, the curing is generally preferably performed with an electron beam acceleration apparatus having an acceleration voltage in the range of 10 to 300 kV at a transfer speed in the range of 5 to 50 m/min.

A laminate film obtained with an adhesive according to the present invention does not easily undergo separation of the films and can maintain the bonding strength even under wet heat conditions. Accordingly, the laminate film is suitably applicable to, for example, members for liquid crystal display devices such as reflection films, antireflection films, antiglare films, phase difference films, polarizing films, brightness enhancement films, and diffusion films, and solar-cell back sheets.

### EXAMPLES

Hereinafter, the present invention will be described more specifically with reference to Examples and Comparative examples. However, the present invention is not limited to these Examples.

Note that, in the present invention, the weight-average molecular weight (Mw) is measured by gel permeation chromatography (GPC) under the following conditions.
Measurement device: HLC-8220GPC manufactured by Tosoh Corporation
Columns: TSK-GUARDCOLUMN Super HZ-L manufactured by Tosoh Corporation
   + TSK-GEL Super HZM-M × 4 manufactured by Tosoh Corporation
Detector: RI (refractive index detector)
Data processing: Multi-station GPC-8020 model II manufactured by Tosoh Corporation
Measurement conditions:
   Column temperature 40°C
   Solvent tetrahydrofuran
   Flow rate 0.35 ml/min
Standards: monodisperse polystyrenes
Sample: sample (100 µl) prepared by filtering a 0.2 mass% tetrahydrofuran solution in terms of resin solid content with a microfilter

### Production example 1

### Production of (Meth)acrylate compound (A-1)

A flask equipped with a thermometer, a stirrer, and a condenser was charged with 60 parts by mass of polyester polyol (number-average molecular weight (Mn): 2,000, hydroxyl value: 110 mgKOH/g) obtained by the reaction between 3-methyl-1,5-pentanediol and adipic acid, 0.1 g of zinc octenoate, and 0.1 g of hydroquinone monomethyl ether. This mixture was heated to 80°C under stirring and 26 parts by mass of isophorone diisocyanate was added over 30 minutes during which generated heat is observed. After this addition, the reaction was made to proceed for 5 hours. After that, 14 parts by mass of hydroxyethyl acrylate was added and the reaction was made to proceed for another 7 hours. Disappearance of absorption of isocyanate groups in an infrared absorption spectrum was confirmed. Thus, (Meth)acrylate compound (A-1) was obtained that had a weight-average molecular weight (Mw) of 10,000, a Tg of - 20°C, an acryloyl-group concentration of 0.2 mmol/g, and a urethane-linkage concentration of 1.0 mmol/g.

### Production example 2

### Production of (Meth)acrylate compound (A-2)

A flask equipped with a thermometer, a stirrer, and a condenser was charged with 53 parts by mass of polyester polyol (number-average molecular weight (Mn): 2,000, hydroxyl value: 150 mgKOH/g) obtained by the reaction between 3-methyl-1,5-pentanediol and terephthalic acid, 0.1 g of zinc octenoate, and 0.1 g of hydroquinone monomethyl ether. This mixture was heated to 80°C under stirring and 31 parts by mass of isophorone diisocyanate was added over 30 minutes during which generated heat is observed. After this addition, the reaction was made to proceed for 5 hours. After that, 16 parts by mass of hydroxyethyl acrylate was added and the reaction was made to proceed for another 7 hours. Disappearance of absorption of isocyanate groups in an infrared absorption spectrum was confirmed. Thus, (Meth)acrylate compound (A-2) was obtained that had a weight-average molecular weight (Mw) of 10,000, a Tg of 50°C, an acryloyl-group concentration of 0.2 mmol/g, and a urethane-linkage concentration of 1.0 mmol/g.

### Production example 3

### Production of (Meth)acrylate compound (A-3)

A flask equipped with a thermometer, a stirrer, and a condenser was charged with 56 parts by mass of polyester polyol (number-average molecular weight (Mn): 2,000, hydroxyl value: 130 mgKOH/g) obtained by the reaction among 3-methyl-1,5-pentanediol, adipic acid, and terephthalic acid, 0.1 g of zinc octenoate, and 0.1 g of hydroquinone monomethyl ether. This mixture was heated to 80°C under stirring and 29 parts by mass of isophorone diisocyanate was added over 30 minutes during which generated heat is observed. After this addition, the reaction was made to proceed for 5 hours. After that, 15 parts by mass of hydroxyethyl acrylate was added and the reaction was made to proceed for another 7 hours. Disappearance of absorption of isocyanate groups in an infrared absorption spectrum was confirmed. Thus, (Meth)acrylate compound (A-3) was obtained that had a weight-average molecular weight (Mw) of 10,000, a Tg of 10°C, an acryloyl-group concentration of 0.2 mmol/g, and a urethane-linkage concentration of 1.0 mmol/g.

### Production example 4

### Production of (Meth)acrylate compound (A-4)

A flask equipped with a thermometer, a stirrer, and a condenser was charged with 64 parts by mass of polyester polyol (number-average molecular weight (Mn): 2,000, hydroxyl value: 110 mgKOH/g) obtained by the reaction between 3-methyl-1,5-pentanediol and adipic acid, 0.1 g of zinc octenoate, and 0.1 g of hydroquinone monomethyl ether. This mixture was heated to 80°C under stirring and 22 parts by mass of tolylene diisocyanate was added over 30 minutes during which generated heat is observed. After this addition, the reaction was made to proceed for 5 hours. After that, 14 parts by mass of hydroxyethyl acrylate was added and the reaction was made to proceed for another 7 hours. Disappearance of absorption of isocyanate groups in an infrared absorption spectrum was confirmed. Thus, (Meth)acrylate compound (A-4) was obtained that had a weight-average molecular weight (Mw) of 10,000, a Tg of 10°C, an acryloyl-group concentration of 0.2 mmol/g, and a urethane-linkage concentration of 1.0 mmol/g.

### Production example 5

### Production of (Meth)acrylate compound (A-5)

A flask equipped with a thermometer, a stirrer, and a condenser was charged with 57 parts by mass of polyester polyol (number-average molecular weight (Mn): 2,000, hydroxyl value: 110 mgKOH/g) obtained by the reaction between 3-methyl-1,5-pentanediol and adipic acid, 0.1 g of zinc octenoate, and 0.1 g of hydroquinone monomethyl ether. This mixture was heated to 80°C under stirring and 30 parts by mass of dicyclohexylmethane-4,4'-diisocyanate was added over 30 minutes during which generated heat is observed. After this addition, the reaction was made to proceed for 5 hours. After that, 13 parts by mass of hydroxyethyl acrylate was added and the reaction was made to proceed for another 7 hours. Disappearance of absorption of isocyanate groups in an infrared absorption spectrum was confirmed. Thus, (Meth)acrylate compound (A-5) was obtained that had a weight-average molecular weight (Mw) of 10,000, a Tg of 10°C, an acryloyl-group concentration of 0.2 mmol/g, and a urethane-linkage concentration of 1.0 mmol/g.

### Production example 6

### Production of (Meth)acrylate compound (A-6)

A flask equipped with a thermometer, a stirrer, and a condenser was charged with 58 parts by mass of polyester polyol (number-average molecular weight (Mn): 2,000, hydroxyl value: 110 mgKOH/g) obtained by the reaction between 3-methyl-1,5-pentanediol and adipic acid, 0.1 g of zinc octenoate, and 0.1 g of hydroquinone monomethyl ether. This mixture was heated to 80°C under stirring and 29 parts by mass of 4,4'-diphenylmethane diisocyanate was added over 30 minutes during which generated heat is observed. After this addition, the reaction was made to proceed for 5 hours. After that, 13 parts by mass of hydroxyethyl acrylate was added and the reaction was made to proceed for another 7 hours. Disappearance of absorption of isocyanate groups in an infrared absorption spectrum was confirmed. Thus, (Meth)acrylate compound (A-6) was obtained that had a weight-average molecular weight (Mw) of 10,000, a Tg of 30°C, an acryloyl-group concentration of 0.2 mmol/g, and a urethane-linkage concentration of 1.0 mmol/g.

### Production example 7

### Production of Polyester resin (B-1)

A flask equipped with a thermometer, a stirrer, and a condenser was charged with 15 parts by mass of ethylene glycol, 10 parts by mass of neopentyl glycol, and 5 parts by mass of trimethylolpropane. This mixture was heated to 80°C and dissolved, and 15 parts by mass of terephthalic acid, 10 parts by mass of isophthalic acid, 55 parts by mass of adipic acid, and 0.1 parts by mass of titanium bisdioctylpyrophosphate oxyacetate were then added. This mixture was gradually heated to 255°C in a nitrogen gas atmosphere and the reaction was made to proceed for 20 hours. Thus, Polyester resin (B-1) was obtained that had a weight-average molecular weight (Mw) of 12,000 and an acid value of 60 mgKOH/g.

### Production example 8

### Production of Polyester resin (B-2)

A flask equipped with a thermometer, a stirrer, and a condenser was charged with 10 parts by mass of ethylene glycol, 8 parts by mass of neopentyl glycol, and 2 parts by mass of trimethylolpropane. This mixture was heated to 80°C and dissolved, and 12 parts by mass of terephthalic acid, 13 parts by mass of isophthalic acid, 55 parts by mass of adipic acid, and 0.1 parts by mass of titanium bisdioctylpyrophosphate oxyacetate were then added. This mixture was gradually heated to 255°C in a nitrogen gas atmosphere and the reaction was made to proceed for 20 hours. Thus, Polyester resin (B-2) was obtained that had a weight-average molecular weight (Mw) of 11,000 and an acid value of 70 mgKOH/g.

### Production example 9

### Production of (Meth)acrylate compound (C-1)

A flask equipped with a thermometer, a stirrer, and a condenser was charged with 40 parts by mass of polyester polyol (number-average molecular weight (Mn): 2,000, hydroxyl value: 110 mgKOH/g) obtained by the reaction between 3-methyl-1,5-pentanediol and adipic acid, 0.1 g of zinc octenoate, and 0.1 g of hydroquinone monomethyl ether. This mixture was heated to 80°C under stirring and 51 parts by mass of isophorone diisocyanate was added over 30 minutes during which generated heat is observed. After this addition, the reaction was made to proceed for 5 hours. After that, 9 parts by mass of hydroxyethyl acrylate was added and the reaction was made to proceed for another 7 hours. Disappearance of absorption of isocyanate groups in an infrared absorption spectrum was confirmed. Thus, (Meth)acrylate compound (C-1) was obtained that had a weight-average molecular weight (Mw) of 60,000, a Tg of-40°C, an acryloyl-group concentration of 0.03 mmol/g, and a urethane-linkage concentration of 0.5 mmol/g.

### Comparative production example 1

### Production of Polyester resin (B')

A flask equipped with a thermometer, a stirrer, and a condenser was charged with 23 parts by mass of ethylene glycol, 15 parts by mass of neopentyl glycol, and 8 parts by mass of trimethylolpropane. This mixture was heated to 80°C and dissolved, and 13 parts by mass of terephthalic acid, 9 parts by mass of isophthalic acid, 47 parts by mass of adipic acid, and 0.1 parts by mass of titanium bisdioctylpyrophosphate oxyacetate were then added. This mixture was gradually heated to 255°C in a nitrogen gas atmosphere and the reaction was made to proceed for 20 hours. Thus, Polyester resin (B') was obtained that had a weight-average molecular weight (Mw) of 12,000 and an acid value of 15 mgKOH/g.

### Comparative production example 2

### Production of Acrylic polymer (1)

A reaction apparatus equipped with a stirring device, a condenser, a dropping funnel, and a nitrogen inlet tube was charged with 500 parts by mass of methyl isobutyl ketone. The system was heated under stirring until the internal temperature reached 110°C. Subsequently, a mixed solution containing 250 parts by mass of methyl methacrylate and 5.5 parts by mass of t-butylperoxy-2-ethylhexanoate ("PERBUTYL O" manufactured by Nippon Nyukazai Co., Ltd.) was dropped from the dropping funnel over 2 hours. The solution was then maintained at 110°C for 15 hours to provide 997 parts by mass of a methyl isobutyl ketone solution of Acrylic polymer (1). This Acrylic polymer (1) had the following property values: a non-volatile content of 50.7% by mass, a Tg of 105°C, a weight-average molecular weight (Mw) of 47,500, and an SP value of 10.0.

### Plastic films

• Film 1: PET film having aqueous polyurethane layer (easy-to-bond layer) ("COSMOSHINE A4300" manufactured by TOYOBO CO., LTD.)
• Film 2: untreated PET film ("back surface of COSMOSHINE A4100" manufactured by TOYOBO CO., LTD.)
• Film 3: untreated PET film ("back surface of E5101" manufactured by TOYOBO CO., LTD.)
• Film 4: polycarbonate film ("PC-9391" manufactured by Teijin Chemicals Ltd.)
• Film 5: fluorocarbon resin film ("Fluon ETFE" manufactured by Asahi Glass Co., Ltd.)

### Example 1

An active-energy-ray-curable resin composition was obtained by mixing 70 parts by mass of the (Meth)acrylate compound (A-1) and 30 parts by mass of the Polyester resin (B-1), which were obtained in the above-described Production examples, 3 parts by mass of IRGACURE-184 (manufactured by Ciba Specialty Chemicals), 1 part by mass of Lucirin TPO (manufactured by BASF), and 230 parts by mass of cyclohexanone. This resin composition was used to form a laminate film with the following procedure and various evaluations were performed. The results are described in Table 1.

### <Formation of laminate film>

The above-described Film 1 was used as a coating base member. The active-energy-ray-curable resin composition was applied to the easy-to-bond layer side of the Film 1 with No. 17 bar coater and dried to evaporate the solvent at 120°C for a minute. After that, the above-described Film 2 serving as a cover base member was placed thereon and laminated such that the untreated surface faces the adhesive side. Heating was performed again at 120°C for a minute. After that, light was applied on the Film 1 surface side with a high-pressure mercury-vapor lamp under a condition of 1000 mJ/cm² to cause curing. Thus, a laminate film was obtained.

### <Evaluation 1: bonding strength>

The laminate film formed by the above-described method was manually separated at the bonding surface between the coating base member and the cover base member. The bonding level was evaluated on the basis of the following grades. Excellent: Occurrence of destruction of the coating base member or the cover base member Good: Occurrence of destruction of the adhesive layer without separation of the coating base member and the cover base member at the surfaces bonded to the adhesive Poor: Separation easily caused by hand or occurrence of separation at the time of curing

### <Evaluation 2: bonding strength under wet heat conditions>

The laminate film formed by the above-described method was left at rest under conditions of 80°C and 90 RH% for 100 hours and then manually separated at the bonding surface between the Film 1 and the cover base member. The bonding level was evaluated on the basis of the following grades. Excellent: Occurrence of destruction of the coating base member or the cover base member Good: Occurrence of destruction of the adhesive layer without separation of the coating base member and the cover base member at the surfaces bonded to the adhesive Poor: Separation easily caused by hand or occurrence of separation at the time of curing

### Examples 2 to 15

Active-energy-ray-curable resin compositions and laminate films were obtained and evaluated as in Example 1 except that the formulation of the active-energy-ray-curable resin compositions was changed and the coating base member and the cover base member used for the laminate films were changed to the film combinations described in Table 1 and Table 2. The evaluation results are described in Table 1 and Table 2.

### Comparative examples 1 to 5

Active-energy-ray-curable resin compositions and laminate films were obtained and evaluated as in Example 1 except that the formulation of the active-energy-ray-curable resin compositions was changed and the coating base member and the cover base member used for the laminate films were changed to the film combinations described in Table 3. The evaluation results are described in Table 3.

[Table 1]

**Table 1**

| | | Example 1 | Example 2 | Example 3 | Example 4 | Example 5 | Example 6 | Example 7 | Example 8 |
|---|---|---|---|---|---|---|---|---|---|
| (Meth)acrylate compound (A-1) [parts by mass] | | 70 | 90 | 50 | | | | | |
| (Meth)acrylate compound (A-2) [parts by mass] | | | | | 70 | | | | |
| (Meth)acrylate compound (A-3) [parts by mass] | | | | | | 70 | | | |
| (Meth)acrylate compound (A-4) [parts by mass] | | | | | | | 70 | | |
| (Meth)acrylate compound (A-5) [parts by mass] | | | | | | | | 70 | |
| (Meth)acrylate compound (A-6) [parts by mass] | | | | | | | | | 70 |
| (Meth)acrylate compound (A-7) [parts by mass] | | | | | | | | | |
| Polyester resin (B-1) [parts by mass] | | 30 | 10 | 50 | 30 | 30 | 30 | 30 | 30 |
| Polyester resin (B-2) [parts by mass] | | | | | | | | | |
| (Meth)acrylate compound (C-1) [parts by mass] | | | | | | | | | |
| IRGACURE-184 [parts by mass] | | 3 | 3 | 3 | 3 | 3 | 3 | 3 | 3 |
| Lucirin TPO [parts by mass] | | 1 | 1 | 1 | 1 | 1 | 1 | 1 | 1 |
| cyclohexanone [parts by mass] | | 230 | 175 | 275 | 230 | 230 | 230 | 230 | 230 |
| Non-volatile content (% by mass) | | 20 | 20 | 20 | 20 | 20 | 20 | 20 | 20 |
| Viscosity (mPa·s) | | 200 | 50 | 500 | 300 | 200 | 200 | 300 | 300 |
| Film | Coating base member | Film 1 | Film 1 | Film 1 | Film 1 | Film 1 | Film 1 | Film 1 | Film 1 |
| | Cover base member | Film 2 | Film 2 | Film 2 | Film 2 | Film 2 | Film 2 | Film 2 | Film 2 |
| Bonding strength | | Excellent | Excellent | Excellent | Excellent | Excellent | Excellent | Excellent | Excellent |
| Bonding strength under wet heat conditions | | Excellent | Excellent | Excellent | Excellent | Excellent | Excellent | Excellent | Excellent |

[Table 2]

**Table 2**

| | | Example 9 | Example 10 | Example 11 | Example 12 | Example 13 | Example 14 | Example 15 |
|---|---|---|---|---|---|---|---|---|
| (Meth)acrylate compound (A-1) [parts by mass] | | | | | | | | |
| (Meth)acrylate compound (A-2) [parts by mass] | | | | | | | | |
| (Meth)acrylate compound (A-3) [parts by mass] | | | 70 | 70 | 70 | 70 | 70 | 70 |
| (Meth)acrylate compound (A-4) [parts by mass] | | | | | | | | |
| (Meth)acrylate compound (A-5) [parts by mass] | | | | | | | | |
| (Meth)acrylate compound (A-6) [parts by mass] | | | | | | | | |
| (Meth)acrylate compound (A-7) [parts by mass] | | 70 | | | | | | |
| Polyester resin (B-1) [parts by mass] | | 30 | | 30 | 30 | 20 | 20 | 20 |
| Polyester resin (B-2) [parts by mass] | | | 30 | | | | | |
| (Meth)acrylate compound (C-1) [parts by mass] | | | | | | 10 | 10 | 10 |
| IRGACURE-184 [parts by mass] | | 3 | 3 | 3 | 3 | 3 | 3 | 3 |
| Lucirin TPO [parts by mass] | | 1 | 1 | 1 | 1 | 1 | 1 | 1 |
| cyclohexanone [parts by mass] | | 230 | 230 | 230 | 230 | 230 | 230 | 230 |
| Non-volatile content (% by mass) | | 20 | 20 | 20 | 20 | 20 | 20 | 20 |
| Viscosity (mPa·s) | | 300 | 300 | 200 | 200 | 300 | 300 | 300 |
| Film | Coating base member | Film 1 | Film 1 | Film 4 | Film 3 | Film 3 | Film 5 | Film 5 |
| | Cover base member | Film 2 | Film 2 | Film 2 | Film 1 | Film 1 | Film 1 | Film 1 |
| Bonding strength | | Excellent | Excellent | Excellent | Good | Excellent | Excellent | Excellent |
| Bonding strength under wet heat conditions | | Excellent | Excellent | Excellent | Good | Good | Good | Good |

[Table 3]

**Table 3**

| | | Comparative example 1 | Comparative example 2 | Comparative example 3 | Comparative example 4 | Comparative example 5 |
|---|---|---|---|---|---|---|
| (Meth)acrylate compound (A-1) [parts by mass] | | 70 | | | | |
| Polyester resin (B') [parts by mass] | | 30 | | | | |
| Acrylic polymer (1) [parts by mass] | | | 100 | 100 | 100 | 100 |
| pentaerythritol tetraacrylate [parts by mass] | | | 50 | 50 | 50 | 50 |
| IRGACURE-184 [parts by mass] | | 3 | 3 | 3 | 3 | 3 |
| Lucirin TPO [parts by mass] | | 1 | 1 | 1 | 1 | 1 |
| cyclohexanone [parts by mass] | | 230 | 50 | 50 | 50 | 50 |
| Film | Coating base member | Film 1 | Film 1 | Film 3 | Film 4 | Film 5 |
| | Cover base member | Film 2 | Film 2 | Film 1 | Film 2 | Film 1 |
| Bonding strength | | Poor | Poor | Poor | Poor | Poor |
| Bonding strength under wet heat conditions | | Poor | Poor | Poor | Poor | Poor |

## Claims

1. An active-energy-ray-curable resin composition comprising, as essential components, a (meth)acrylate compound (A), a polyester resin (B), and a polymerization initiator (D), the (meth)acrylate compound (A) having a weight-average molecular weight (Mw) in a range of 5,000 to 30,000 and including, in a molecular structure, a (meth)acryloyl group and a polyester moiety that is obtained by reacting an aliphatic polyol and an aliphatic or aromatic polybasic acid that serve as main raw material components, and the polyester resin (B) having an acid value in a range of 40 to 90 mgKOH/g and being obtained by reacting an aliphatic polyol and an aliphatic or aromatic polybasic acid that serve as main raw material components.

2. The active-energy-ray-curable resin composition according to Claim 1, wherein the (meth)acrylate compound (A) is a compound obtained by reacting, as essential components, a polyester polyol (a1) having a number-average molecular weight (Mn) in a range of 500 to 6,000, a polyisocyanate compound (a2), and a hydroxy-group-containing (meth)acrylate compound (a3).

3. The active-energy-ray-curable resin composition according to Claim 1, wherein the (meth)acrylate compound (A) has a (meth)acryloyl-group concentration in a range of 0.05 to 0.5 mmol/g.

4. The active-energy-ray-curable resin composition according to Claim 1, wherein the polyester resin (B) has a weight-average molecular weight (Mw) in a range of 3,000 to 20,000.

5. The active-energy-ray-curable resin composition according to Claim 1, wherein a content ratio by mass of [(A)/(B)] of the (meth)acrylate compound (A) to the polyester resin (B) is in a range of 98/2 to 20/80.

6. The active-energy-ray-curable resin composition according to Claim 1, comprising, in addition to the (meth)acrylate compound (A) and the polyester resin (B), a (meth)acrylate compound (C) having a weight-average molecular weight (Mw) in a range of 40,000 to 100,000 and including, in a molecular structure, a (meth)acryloyl group and a polyester moiety that is obtained by reacting an aliphatic polyol and an aliphatic or aromatic polybasic acid that serve as main raw material components.

7. The active-energy-ray-curable resin composition according to Claim 6, wherein a content ratio by mass of [(A)/(C)] of the (meth)acrylate compound (A) to the meth)acrylate compound (C) is in a range of 50/50 to 98/2.

8. An adhesive comprising the active-energy-ray-curable resin composition according to any one of Claims 1 to 7.

9. A laminate film obtained by applying the adhesive according to Claim 8 to a film-shaped coating base member and by placing a film-shaped cover base member on the applied adhesive, wherein at least one of the coating base member and the cover base member is a difficult-to-bond film.

## Patentansprüche

1. Aktivenergiestrahlen-härtbare Harzzusammensetzung, die als essentielle Bestandteile eine (Meth)Acrylatverbindung (A), ein Polyesterharz (B) und einen Polymerisationsinitiator (D) umfasst, wobei die (Meth)Acrylatverbindung (A) ein gewichtsgemitteltes Molekulargewicht (Mw) in einem Bereich von 5.000 bis 30.000 aufweist und in einer Molekularstruktur eine (Meth)Acryloylgruppe und einen Polyesteranteil beinhaltet, der durch das Reagieren eines aliphatischen Polyols und einer aliphatischen oder aromatischen mehrprotonigen Säure, die als Hauptrohmaterialbestandteile dienen, erhalten ist, und wobei das Polyesterharz (B) einen Säurewert in einem Bereich von 40 bis 90 mgKOH/g aufweist und durch das Reagieren eines aliphatischen Polyols und einer aliphatischen oder aromatischen mehrprotonigen Säure, die als Hauptrohmaterialbestandteile dienen, erhalten ist.

2. Aktivenergiestrahlen-härtbare Harzzusammensetzung nach Anspruch 1, wobei die (Meth)Acrylatverbindung (A) eine Verbindung ist, die durch das Reagieren, als essentielle Bestandteile, eines Polyesterpolyols (a1) mit einem zahlengemittelten Molekulargewicht (Mn) in einem Bereich von 500 bis 6.000, einer Polyisocyanatverbindung (a2) und einer Hydroxygruppe-enthaltenden (Meth)Acrylatverbindung (a3) erhalten ist.

3. Aktivenergiestrahlen-härtbare Harzzusammensetzung nach Anspruch 1, wobei die (Meth)Acrylatverbindung (A) eine (Meth)Acryloyl-Gruppenkonzentration in einem Bereich von 0,05 bis 0,5 mmol/g aufweist.

4. Aktivenergiestrahlen-härtbare Harzzusammensetzung nach Anspruch 1, wobei das Polyesterharz (B) ein gewichtsgemitteltes Molekulargewicht (Mw) in einem Bereich von 3.000 bis 20.000 aufweist.

5. Aktivenergiestrahlen-härtbare Harzzusammensetzung nach Anspruch 1, wobei ein Massengehaltsverhältnis von [(A)/(B)] von der (Meth)Acrylatverbindung (A) zu dem Polyesterharz (B) in einem Bereich von 98/2 bis 20/80 ist.

6. Aktivenergiestrahlen-härtbare Harzzusammensetzung nach Anspruch 1, die zusätzlich zu der (Meth)Acrylatverbindung (A) und dem Polyesterharz (B) eine (Meth)Acrylatverbindung (C) mit einem gewichtsgemittelten Molekulargewicht (Mw) in einem Bereich von 40.000 bis 100.000 aufweist, und die in einer Molekularstruktur eine (Meth)Acryloylgruppe und einen Polyesteranteil beinhaltet, der durch das Reagieren eines aliphatischen Polyols und einer aliphatischen oder aromatischen mehrprotonigen Säure, die als Hauptrohmaterialbestandteile dienen, erhalten ist.

7. Aktivenergiestrahlen-härtbare Harzzusammensetzung nach Anspruch 6, wobei ein Massengehaltsverhältnis von [(A)/(C)] von der (Meth)Acrylatverbindung (A) zu der (Meth)Acrylatverbindung (C) in einem Bereich von 50/50 bis 98/2 ist.

8. Haftmittel, das die aktivenergiestrahlen-härtbare Harzzusammensetzung nach einem der Ansprüche 1 bis 7 umfasst.

9. Laminatfilm, der durch Aufbringen des Haftmittels nach Anspruch 8 auf ein Film-geformtes Beschichtungsbasiselement und durch Platzieren eines Film-geformten Bedeckungsbasiselements auf das aufgebrachte Haftmittel erhalten ist, wobei zumindest eines aus dem Beschichtungsbasiselement und dem Bedeckungsbasiselement ein schwierig-zu-bindender Film ist.

## Revendications

1. Composition de résine durcissable par un rayonnement d'énergie active comprenant, à titre de composants essentiels, un composé de (méth)acrylate (A), une résine polyester (B), et un amorceur de polymérisation (D), le composé de (méth)acrylate (A) ayant un poids moléculaire moyen en poids (Mw) dans une plage de 5 000 à 30 000 et contenant, dans sa structure moléculaire, un groupe (méth)acryloyle et un fragment polyester qui est obtenu par réaction d'un polyol aliphatique et d'un acide polybasique aliphatique ou aromatique qui servent de principaux composants de départ, et la résine polyester (B) ayant un indice d'acide dans une plage de 40 à 90 mg de KOH/g et étant obtenue par réaction d'un polyol aliphatique et d'un acide polybasique aliphatique ou aromatique qui servent de principaux composants de départ.

2. Composition de résine durcissable par un rayonnement d'énergie active selon la revendication 1, dans laquelle le composé de (méth)acrylate (A) est un composé obtenu par réaction, à titre de composants essentiels, d'un polyester polyol (a1) ayant un poids moléculaire moyen en nombre (Mn) dans une plage de 500 à 6 000, d'un composé de polyisocyanate (a2), et d'un composé de (méth)acrylate contenant un groupe hydroxy (a3).

3. Composition de résine durcissable par un rayonnement d'énergie active selon la revendication 1, dans laquelle le composé de (méth)acrylate (A) a une concentration en groupes (méth)acryloyle dans une plage de 0,05 à 0,5 mmol/g.

4. Composition de résine durcissable par un rayonnement d'énergie active selon la revendication 1, dans laquelle la résine polyester (B) a un poids moléculaire moyen en poids (Mw) dans une plage de 3 000 à 20 000.

5. Composition de résine durcissable par un rayonnement d'énergie active selon la revendication 1, dans laquelle un rapport de teneurs en poids de [(A)/(B)] du composé de (méth)acrylate (A) à la résine polyester (B) est dans une plage de 98/2 à 20/80.

6. Composition de résine durcissable par un rayonnement d'énergie active selon la revendication 1 comprenant, en plus du composé de (méth)acrylate (A), et de la résine polyester (B), un composé de (méth)acrylate (C) ayant un poids moléculaire moyen en poids (Mw) dans une plage de 40 000 à 100 000 et contenant, dans sa structure moléculaire, un groupe (méth)acryloyle et un fragment polyester qui est obtenu par réaction d'un polyol aliphatique et d'un acide polybasique aliphatique ou aromatique qui servent de principaux composants de départ.

7. Composition de résine durcissable par un rayonnement d'énergie active selon la revendication 6, dans laquelle un rapport de teneurs en poids de [(A)/(C)] du composé de (méth)acrylate (A) au composé de (méth)acrylate (C) est dans une plage de 50/50 à 98/2.

8. Adhésif comprenant la composition de résine durcissable par un rayonnement d'énergie active selon l'une quelconque des revendications 1 à 7.

9. Film stratifié obtenu par application de l'adhésif selon la revendication 8 à un élément de base de revêtement sous forme de film et par placement d'un élément de base de protection sous forme de film sur l'adhésif appliqué, dans lequel au moins un de l'élément de base de revêtement et/ou de l'élément de base de protection est un film difficile à lier.
